# EUROPÄISCHE PATENTSCHRIFT

(11) **EP 0 701 364 B1**
(45) Veröffentlichungstag und Bekanntmachung des Hinweises auf die Patenterteilung: **07.05.2003**
(21) Anmeldenummer: 95112139.1
(22) Anmeldetag: 02.08.1995
(51) Int. Cl.: H04N 5/225

(54) **Videokamera**
Video camera
Caméra vidéo

(30) Priorität: 17.08.1994 DE 9413254 U
(43) Veröffentlichungstag der Anmeldung: 13.03.1996
(73) Patentinhaber: Gebrüder Merten GmbH & Co. KG, D-51674 Wiehl (DE)
(72) Erfinder: Schlechtingen, Peter, Dipl.-Ing., D-51597 Lichtenberg (DE)
(74) Vertreter: Selting, Günther, Dipl.-Ing.

(56) Entgegenhaltungen:
- EP-A- 0 436 804
- EP-A- 0 591 585
- DE-A- 3 447 089
- DE-U- 9 307 023

## Beschreibung

Die Erfindung betrifft eine Videokamera zur festen Installation in oder auf Wänden.

Aus DE-U-93 07 023 ist ein Überwachungsgerät bekannt, das eine Videokamera mit den Merkmalen des Oberbegriffs des Patentanspruchs 1 enthält. Die Videokamera ist an einer Platine angebracht, die über eine Stütze an einem Frontteil des Gehäuses montiert ist. Der Bewegungsmelder steuert eine Signalverarbeitungseinheit, die das Signal der Videokamera nur dann wirksam macht, wenn der Bewegungsmelder angesprochen hat.

DE-A-3 447 089 beschreibt einen Bewegungsmelder der an einer Wand-Installationsdose montierbar ist. Der Bewegungsmelder weist einen Tragsockel auf, der in die Wanddose eingesetzt werden kann und an einer metallischen Montageplatte befestigt ist. Der Tragsockel bildet ein erstes Gehäuseteil, das ein Netzteil enthält. Ein dem ersten Gehäuseteil vorgesetztes zweites Gehäuseteil enthält den Bewegungsmelder sowie eine Schaltplatte und einen frontseitig zu betätigenden Schalter.

Der Erfindung liegt die Aufgabe zugrunde, eine kleinformatige Videokamera zu schaffen, die leicht und ohne Montageaufwand unter Verwendung herkömmlicher elektrischer Installationsmaterialien montiert werden kann und die optisch fast nicht in Erscheinung tritt und keinen zusätzlichen Platz benötigt.

Die Lösung dieser Aufgabe erfolgt erfindungsgemäß mit den im Patentanspruch 1 angegebenen Merkmalen.

Die erfindungsgemäße Videokamera ist für den Einbau in Installationsdosen geeignet, wie sie für Steckdosen und Schalter in der elektrotechnischen Installationstechnik üblich sind. Solche Installationsdosen haben einen Durchmesser von etwa 58 mm oder 70 mm. Es handelt sich
um zylindrische Dosen, die an ihrer Vorderseite offen sind und als Unterputzdosen in die Wand eingesetzt werden. Spezielle Aufputzdosen werden auf der Wand montiert. Die erfindungsgemäße Videokamera kann wie ein Schalter oder eine Steckdose in einer Installationsdose montiert werden, so daß sie keine spezielle Halterung an der Wand benötigt. Bei der Planung der Elektroinstallation ist lediglich an geeigneter Stelle eine übliche Installationsdose für die Videokamera vorzusehen. Bei der Leitungsverlegung werden dieser Installationsdose die üblichen Netzanschlußleitungen zugeführt. Zusätzlich kann noch ein weiteres Kabel für das Videoausgangssignal verlegt werden.

Die erfindungsgemäße Videokamera kann beispielsweise dazu benutzt werden, Kinderzimmer oder Krankenzimmer zu überwachen, wobei sämtliche Leitungen im Haus-Installationssystem verlegt sind und keine Halterungen oder Befestigungen erforderlich sind. Die Videokamera kann natürlich auch für solche Aufgaben wie Türüberwachung u.dgl. eingesetzt werden, wobei es von Vorteil ist, daß das äußere Erscheinungsbild sich in dasjenige einer Schalter- oder Steckdosenserie einfügt, so daß die Videokamera von außen nicht ohne weiteres als Videokamera erkennbar ist.

Die Videokamera besteht aus zwei Gehäusen, von denen eines in die Installationsdose eingesetzt wird und von denen das zweite vor der Installationsdose an dem ersten Gehäuse montiert wird. Vorzugsweise enthält Das zweite Gehäuse das Kamerateil (die Optik) und ggf. auch das Betriebsteil, während das erste Gehäuse das Netzteil zur Bereitstellung der benötigten Spannung enthält. Es ist auch möglich, das Betriebsteil in dem ersten Gehäuse unterzubringen, wobei das zweite Gehäuse dann nur noch das Kamerateil enthält.

Das zweite Gehäuse ist vorzugsweise an das erste Gehäuse ansteckbar, wobei beim Anstecken zugleich die elektrischen Verbindungen zwischen beiden Gehäusen hergestellt werden. Zwischen beiden Gehäusen kann ferner ein Blendenrahmen vorgesehen sein, wie er in der Installationstechnik üblich ist. Von außen ist dann nur der Blendenrahmen und die Frontseite des zweiten Gehäuseteils sichtbar. Das gesamte Erscheinungsbild der Videokamera fügt sich in dasjenige einer Schalter- oder Steckerserie ein.

Im folgenden wird unter Bezugnahme auf die Zeichnungen ein Ausführungsbeispiel der Erfindung näher erläutert.

Es zeigen:
- Fig. 1: eine Ansicht des ersten und des zweiten Gehäuses in auseinandergenommenem Zustand,
- Fig. 2: das Gerät nach Fig. 1 bei auseinandergenommenem zweiten Gehäuse, und
- Fig. 3: ein Ausführungsbeispiel bei dem neben der Videokamera eine Kabelanschlußbuchse zur Ableitung des Videosignals installiert ist.

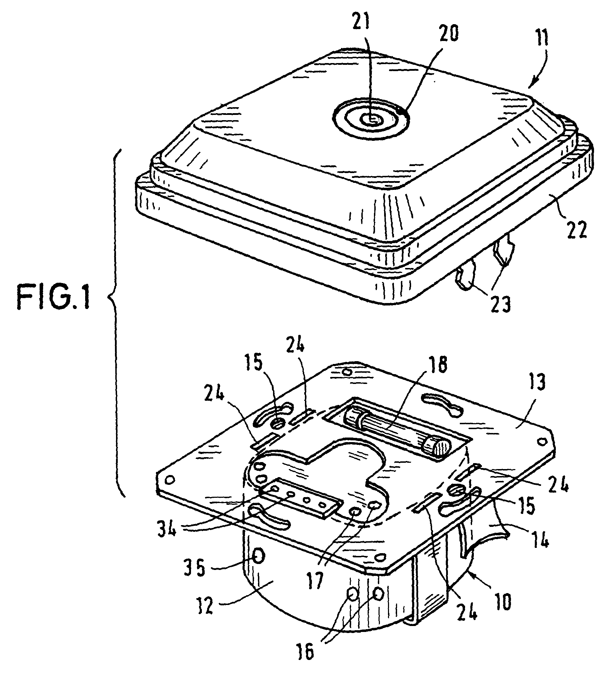

Gemäß Figur 1 ist die Videokamera in zwei Gehäusen 10 und 11 untergebracht. Das erste Gehäuse 10 ist in eine (nicht dargestellte) übliche zylindrische Installationsdose für Steckdosen oder Schalter eingesetzt. Es weist einen aus Kunststoff bestehenden Gehäusekörper 12 auf, der in die Installationsdose hineinpaßt, und eine aus Metall bestehende, seitlich überstehende Montageplatte 13, die sich im montierten Zustand vor der Installationsdose befindet und bei Unterputzdosen bündig mit der Wandoberfläche angeordnet ist. An der Montageplatte 13 sind Spreizkrallen 14 angebracht, die durch Drehen einer Schraube 15 auseinandergespreizt werden und sich dadurch an der Installationsdose verkrallen.

Das erste Gehäuse 10 enthält ein Netzteil, das aus der Netzspannung, die Versorgungsspannung(en) für das Betriebsteil und das Kamerateil erzeugt. Für den Anschluß von Netzleitungen sind in dem Gehäuse 10 versenkt angeordnete Anschlußklemmen 16 vorgesehen, in die Netzleitungen eingesteckt werden, sowie Schraublöcher 17 zum Festziehen der Anschlußklemmen. Ferner enthält das Gehäuse 10 an seiner Vorderseite eine von außen zugängliche leicht auswechselbare Sicherung 18 als Schutz gegen Überspannung.

Das zweite Gehäuse 11 hat an seiner dem ersten Gehäuse 10 entgegengesetzten Frontseite eine Öffnung 20 für das Kameraobjektiv 21. Das zweite Gehäuse 11 ist ein flacher quadratischer Körper, der von einem Blendenrahmen 22 umfaßt ist. Von der Bodenwand des Gehäuses 11 erstrecken sich Federklemmen 23, die in entsprechenden Schlitzen 24 der Montageplatte 13 einrasten können. Auf diese Weise wird das Gehäuse 11 an dem Gehäuse 10 schraubenlos durch einfache Verrastung montiert.

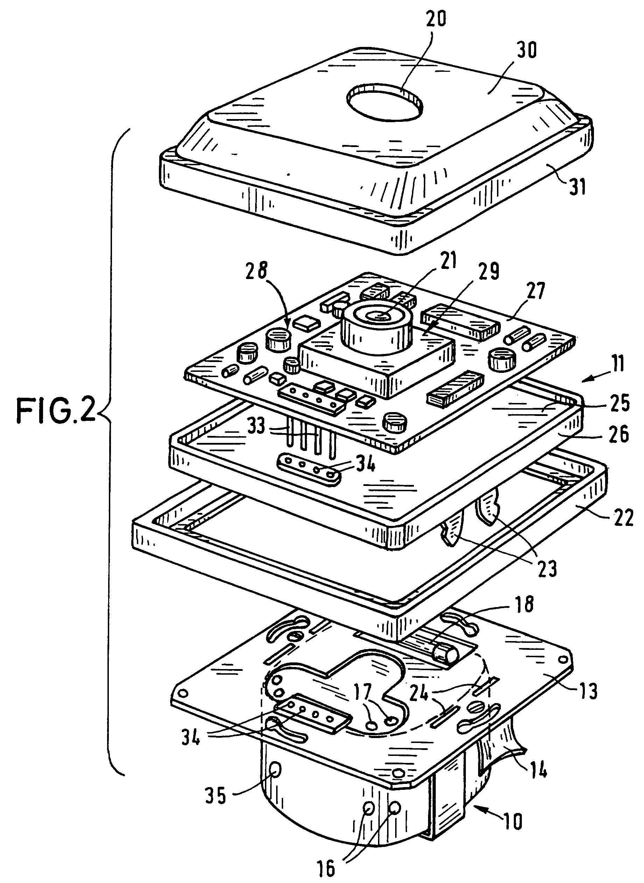

Wie Fig. 2 zeigt, weist das zweite Gehäuse 11 einen geschlossenen Boden 25 auf, mit einem umlaufenden Rand 26. Auf dem Boden 25 liegt eine Platine 27, die von dem Rand 26 zentriert wird. Auf der Platine 27 befinden sich die Bauteile des Betriebsteils 28 sowie der Kamerateil 29 mit dem Objektiv 21. Der Kamerateil 29 enthält eine CCD-Kamera (charge coupled device) oder PCD-Kamera (plasma coupled device). Er ist auf der Platine 27 fest angebracht, wobei die optische Achse der Kameraoptik senkrecht zur Platine weist. Das Gehäuse 11 wird von einem Deckel 30 abgeschlossen, der den Boden 25 mit der Platine 27 bedeckt und einen umlaufenden Rand 31 aufweist, welcher den Rand 26 des Bodens übergreift, jedoch seinerseits von dem Blendenrahmen 22 umgriffen wird. Das Gehäuse 11 ist somit allseitig geschlossen, mit Ausnahme der Öffnung 20 im Deckel 30.

Von der Platine 27 erstrecken sich Steckverbinder 33 in Form von Kontaktstiften durch Öffnungen 34 im Boden 25 hindurch. Diese Steckverbinder 33 dringen beim Zusammenstecken der Gehäuse in Kontaktbuchsen 34 an der Frontseite des Gehäuses 10 ein. Im vorliegenden Fall sind vier Steckverbinder 33 vorgesehen, nämlich zwei für die Übertragung der Betriebsspannung an das Betriebsteil 29 (Massepotential und Pluspotential), einer für das Herausführen des Videosignals aus dem Betriebsteil 29 und ein weiterer für ein Steuerkabel, durch das das Einschalten und Abschalten der Videokamera gesteuert wird.

Einer der vier Steckverbinder könnte entfallen, wenn die Kamera über die Netzleitungen ein- und ausgeschaltet würde.

An dem das Netzteil enthaltenden Gehäuse 10 ist ferner eine Klemme 35 zum Abführen des Videosignals vorgesehen. Das Videosignal kann durch eine in oder auf der Wand installierte Leitung zu einem Monitor geführt werden.

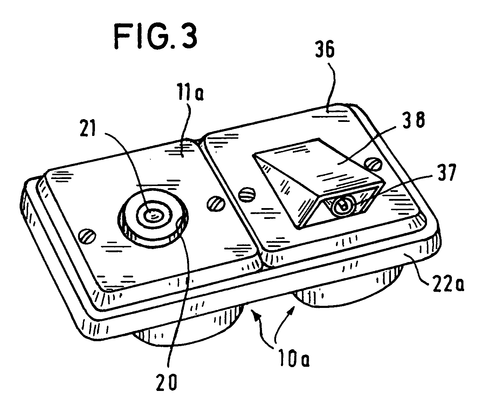

Bei dem Ausführungsbeispiel von Fig. 3 ist der Blendenrahmen 22a ein Doppelrahmen, von dem das Gehäuse 11a nur die eine Hälfte ausfüllt. Die andere Hälfte wird von einem Deckel 36 ausgefüllt, der eine von außen zugängliche Kabelanschlußbuchse 37 enthält. Die Kabelanschlußbuchse 37 ist hier von einer schrägen Haube 38 des Deckels 37 überdeckt. Die Platte 36 ist an einem Halter 10b befestigt, der in einer Installationsdose installiert werden kann, die neben der Installationsdose für das Gehäuse 10a montiert wird. Die Anschlußbuchse 37 ist mit demjenigen Steckverbinder des Gehäuses 10 verbunden, der das Videosignal ausgibt, sowie mit Massepotential. Durch Anstecken eines geeigneten Gegensteckers kann die Kabelanschlußbuchse 37 kann ein Monitor mit der Videokamera verbunden werden.

## Patentansprüche

1. Videokamera mit einem optischen Kamerateil, das einen optoelektronischen Wandler enthält, einem elektronischen Betriebsteil (28) und einem Netzteil zur Bereitstellung der für das Kamerateil und das Betriebsteil benötigten Spannung,
**dadurch gekennzeichnet,**
**daß** das Kamerateil (29), das Betriebsteil (28) und das Netzteil in zwei Gehäusen (10,11) untergebracht sind, nämlich einem ersten Gehäuse (10), das in eine Wand-Installationsdose einsetzbar ist und eine Montageplatte (13) aufweist, und einem zweiten Gehäuse (11), das an der Montageplatte (13) lösbar befestigt ist, das Kamerateil (29) enthält und eine Öffnung (20) für das Kameraobjektiv (21) aufweist.

2. Videokamera nach Anspruch 1, **dadurch gekennzeichnet, daß** das erste Gehäuse (10) das Netzteil und das zweite Gehäuse (11) außer dem Kamerateil (29) das Betriebsteil (28) enthält.

3. Videokamera nach Anspruch 1 oder 2, **dadurch gekennzeichnet, daß** das zweite Gehäuse (11) an das erste Gehäuse (10) ansteckbar ist und daß an beiden Gehäusen (10,11) zusammenpassende elektrische Steckverbinder (33,34) vorgesehen sind.

4. Videokamera nach einem der Ansprüche 1 bis 3, **dadurch gekennzeichnet, daß** die Bauelemente des Betriebsteils (28) auf einer Platine (27) angeordnet sind, die auch das Kamerateil (29) trägt.

5. Videokamera nach einem der Ansprüche 1 bis 4, **dadurch gekennzeichnet, daß** zwischen den beiden Gehäusen (10,11) ein Blendenrahmen (22) vorgesehen ist, der das zweite Gehäuse (11) einfaßt.

6. Videokamera nach einem der Ansprüche 1 bis 5, **dadurch gekennzeichnet, daß** an der Montageplatte (13) bzw. dem ersten Gehäuse (10) ausspreizbare Krallen (14) für die Installationsdosenbefestigung vorgesehen sind.

7. Videokamera nach einem der Ansprüche 1 bis 6, **dadurch gekennzeichnet, daß** der Blendenrahmen (22a) ein Doppelrahmen ist, der außer dem zweiten Gehäuse (11a) eine Frontplatte (36) mit einer Kabelanschlußbuchse (37) umschließt, wobei die Kabelanschlußbuchse (37) mit einem Video-Ausgang des zweiten Gehäuses (11) verbunden ist.

## Claims

1. A video camera comprising an optic camera portion including an optoelectronic converter, and further comprising an operational portion and a supply unit for providing the voltage necessary for the camera portion and the operational portion,
**characterized in that**
the camera portion (29), the operational portion (28) and the supply unit are accommodated in two housings (10, 11), namely a first housing (10) adapted to be placed in a wall installation box and comprising a mounting plate (13), and a second housing (11) that is releasably fastened to the mounting plate (13), contains the camera portion (29) and comprises an opening (20) for the camera objective (21).

2. The video camera of claim 1, wherein the first housing (10) contains the supply unit and the second housing (11) contains the operational portion (28) besides the camera portion (29).

3. The video carnera of claim 1 or 2, wherein the second housing (11) is adapted to be plugged to the first housing (10) and wherein both housings (10, 11) are provided with mating electric plug-in connectors (33, 34).

4. The video camera of one of claims 1 to 3, wherein the components of the operational portion (28) are arranged on a circuit board (27) that also carries the camera portion (29).

5. The video camera of one of claims 1 to 4, wherein a cover frame (22) is provided between the two housings (10, 11), which encloses the second housing (11).

6. The video camera of one of claims 1 to 5, wherein the mounting plate (13) and the first housing (10), respectively, are provided with spreadable claws (14) for installation box fixing.

7. The video camera of one of claims 1 to 6, wherein the cover frame (22a) is a double frame enclosing, besides the second housing (11a), a front plate (36) with a wire connection bushing (37), the wire connection bushing (37) being connected to a video output of the second housing (11).

## Revendications

1. Caméra vidéo comprenant un élément de caméra optique incluant un convertisseur optoélectronique, un élément d'exploitation électronique (28) et un élément de secteur pour fournir la tension nécessaire à l'élément de caméra et à l'élément d'exploitation, **caractérisée en ce que** l'élément de caméra (29), l'élément d'exploitation (28) et l'élément de secteur sont logés dans deux boîtiers (10, 11), à savoir un premier boîtier (10) qui peut être inséré dans une prise d'installation murale et présente une plaque de montage (13), et un deuxième boîtier (11) qui est fixé de manière amovible sur la plaque de montage (13), inclut l'élément de caméra (29) et présente une ouverture (20) pour l'objectif de la caméra (21).

2. Caméra vidéo selon la revendication 1, **caractérisée en ce que** le premier boîtier (10) inclut l'élément de secteur et le deuxième boîtier (11) inclut, outre l'élément de caméra (29), l'élément d'exploitation (28).

3. Caméra vidéo selon la revendication 1 ou 2, **caractérisée en ce que** le deuxième boîtier (11) peut être emboîté sur le premier boîtier (10), et **en ce que** des connecteurs (33, 34) électriques mutuellement complémentaires sont prévus sur les deux boîtiers (10, 11).

4. Caméra vidéo selon l'une quelconque des revendications 1 à 3, **caractérisée en ce que** les composants structurels de l'élément d'exploitation (28) sont disposés sur une platine (27) qui porte également l'élément de caméra (29).

5. Caméra vidéo selon l'une quelconque des revendications 1 à 4, **caractérisée en ce qu'**un cadre-écran (22) est prévu entre les deux boîtiers (10, 11), lequel entoure le deuxième boîtier (11).

6. Caméra vidéo selon l'une quelconque des revendications 1 à 5, **caractérisée en ce que** des griffes écartables (14) sont prévues sur la plaque de montage (13) ou sur le premier boîtier (10) pour la fixation dans la prise d'installation.

7. Caméra vidéo selon l'une quelconque des revendications 1 à 6, **caractérisée en ce que** le cadre-écran (22a) est un cadre double, qui entoure, outre le deuxième boîtier (11a), une plaque frontale (36) comportant une douille de raccordement de câble (37), la douille de raccordement de câble (37) étant reliée à une sortie vidéo du deuxième boîtier (11).
